# EUROPEAN PATENT SPECIFICATION

(11) **EP 4 692 431 B1**
(45) Date of publication and mention of the grant of the patent: **30.09.2026**
(21) Application number: 25186935.0
(22) Date of filing: 02.07.2025
(51) Int. Cl.: D01D 13/02, D01H 13/28, D02G 1/02, D02J 13/00

(54) **COOLER**
KÜHLER
REFROIDISSEUR

(30) Priority: 09.08.2024 JP 2024133951
(43) Date of publication of application: 11.02.2026
(73) Proprietor: TMT Machinery, Inc., Osaka-shi, Osaka 541-0041 (JP)
(72) Inventor: IMANAKA, Akihito, Kyoto-shi, Kyoto, 612-8686 (JP); KITAGAWA, Shigeki, Kyoto-shi, Kyoto, 612-8686 (JP)
(74) Representative: Hoffmann Eitle

(56) References cited:
- CN-A- 115 142 168
- US-A- 3 554 503

## Description

### BACKGROUND OF THE INVENTION

The present invention relates to a cooler configured to cool yarns.

Patent Literature 1 (Japanese Laid-Open Patent Publication No. 2023-012097) discloses a cooler provided in a false-twist texturing machine configured to perform false twisting of running yarns. Such a cooler includes a cooling unit in which a yarn running space where the yarns run is formed, a duct in which an in-duct space is formed, and a negative pressure generator (hereinafter, a suction device) provided at one end portion of the duct. The yarn running space is connected to the in-duct space. As a negative pressure is generated by sucking the gas in the in-duct space by the suction device, an airflow from the yarn running space toward the in-duct space is generated. The yarns running in the yarn running space are cooled by this airflow.

Further relevant information can be found in documents CN 115 142 168 A and US 3 555 503 A. 1

### SUMMARY OF THE INVENTION

Typically, oil is applied to yarns handled by a false-twist texturing machine, in order to facilitate smooth running of the yarns. Therefore, in the cooler described above, foreign matters such as dust and yarn waste containing oil are swirling in the in-duct space connected to the yarn running space. To prevent these foreign matters from entering the suction device, a filter is fixed to a suction port of the suction device. When foreign matters accumulate on the filter, the performance of the suction device decreases. The filter is therefore regularly cleaned. In this connection, access to the filter must be done through a maintenance opening formed in the duct. Therefore, the cleaning of the filter needs to be done by an operator inserting his/her hand through the maintenance opening with an unstable posture. This deteriorates workability. As a result, the cleaning of the filter takes time, and the operational efficiency deteriorates.

An object of the present invention is to provide a cooler capable of improving the operational efficiency.

According to the invention, a cooler is provided in a false-twist texturing machine configured to false-twist running yarns and includes: a duct formed of a tubular member; cooling units aligned along an extending direction of the duct; a suction device connected to one end portion of the duct and capable of sucking gas in an in-duct space of the duct; and a filter configured to allow the gas sucked through a suction port of the suction device to pass through, the in-duct space being connected to yarn running spaces which are formed in the respective cooling units and in which the yarns run, in a direction perpendicular to the extending direction, in the in-duct space, the filter being detachably provided between (i) an end yarn running space closest to the suction port in the extending direction among the yarn running spaces and (ii) the suction port, the duct having a duct opening formed between the end yarn running space and the suction port to allow the filter to pass through, the duct having a supporting surface provided at a part of an inner surface, which opposes the duct opening, and the supporting surface being capable of supporting the filter. The cooler further includes: a lid capable of closing the duct opening; and an elastic member sandwiched between the lid and the filter when the lid closes the duct opening, and the filter being biased toward the supporting surface by restoring force of the elastic member, when the lid closes the duct opening.

According to this embodiment of the present invention, it is possible to clean the filter while the filter is detached and taken out from the duct through the duct opening. As a result, the workability of the cleaning of the filter is improved, and the time required for the cleaning can be shortened. Furthermore, after detaching the filter, another filter can be attached and the cooler can be operated. Therefore, the operational efficiency is improved. When the duct opening is closed by the lid, the filter is biased toward the supporting surface and pressed onto the supporting surface. This makes it possible to position the filter in an opposing direction in which the duct opening and the supporting surface oppose each other.

According to a further embodiment of the invention, a cooler is provided in a false-twist texturing machine configured to false-twist running yarns and includes: a duct formed of a tubular member; cooling units aligned along an extending direction of the duct; a suction device connected to one end portion of the duct and capable of sucking gas in an in-duct space of the duct; and a filter configured to allow the gas sucked through a suction port of the suction device to pass through, the in-duct space being connected to yarn running spaces which are formed in the respective cooling units and in which the yarns run, in a direction perpendicular to the extending direction, in the in-duct space, the filter being detachably provided between (i) an end yarn running space closest to the suction port in the extending direction among the yarn running spaces and (ii) the suction port, and the duct having a duct opening formed between the end yarn running space and the suction port to allow the filter to pass through. The cooler further includes a lid capable of closing the duct opening and a pair of guide members that extend in a direction intersecting with an axial direction of the suction port, and the filter is fitted between the paired guide members.

According to this embodiment of the present invention, it is possible to clean the filter while the filter is detached and taken out from the duct through the duct opening. As a result, the workability of the cleaning of the filter is improved, and the time required for the cleaning can be shortened. Furthermore, after detaching the filter, another filter can be attached and the cooler can be operated. Therefore, the operational efficiency is improved. Furthermore, it is possible to position the filter in the width direction.

According to a another embodiment of the invention, the cooler of the second aspect is arranged so that the lid is integrated with the filter.

According to this embodiment of the present invention, simply by attaching the filter, it is possible to close the duct opening. Furthermore, it is possible to avoid, for example, the loss of the lid.

According to another embodiment of the invention, the cooler of the first or second aspect is arranged so that the lid is attached to the duct to be movable between an open position where the duct opening is open and a closed position where the duct opening is closed.

According to this embodiment of the present invention, because the lid is not detachable from the duct, it is possible to prevent, for example, the loss of the lid.

According to another embodiment of the invention, the cooler of any one of the first to fourth aspects is arranged so that the filter is attached to cover the suction port.

With this embodiment of the present invention, the intrusion of foreign matters into the suction device can be more reliably suppressed.

According to a further embodiment of the invention, the cooler of any one of the first to fifth aspects further includes a fixing mechanism capable of taking a fixing state where the lid is fixed to close the duct opening and a non-fixing state where the lid is not fixed.

According to this embodiment of the present invention, by setting the fixing mechanism in the fixing state during operation, it is possible to suppress unintended opening of the lid.

According to another embodiment of the invention, the cooler of any one of the first to sixth aspects further includes: a contact surface capable of making contact with a surface on the suction port side of the filter; and a biasing member configured to bias the filter toward the contact surface.

With this embodiment of the present invention, the filter can be fixed by pressing the filter onto the contact surface by the biasing member.

According to a further embodiment of the invention, the cooler of any one of the first to seventh aspects is arranged so that the filter includes: a metal frame which forms a frame opening; and a metal net which is welded to one side of the frame in an axial direction of the frame opening, and the filter is attached so that the one side coincides with the suction port side.

If foreign matters adhere to the part where the net is welded to the frame, it is difficult to remove the foreign matters from the net. According to the aspect of the present invention, the filter is mounted so that the side of the frame where the net is welded coincides with the suction port side. On this account, it is possible to avoid foreign matters carried by an airflow toward the suction port from adhering to the part where the net is welded to the frame. This makes it easy to clean the filter.

### BRIEF DESCRIPTION OF THE DRAWINGS

FIG. 1 is a profile of a false-twist texturing machine of an embodiment of the present invention.
FIG. 2 is a schematic diagram of the false-twist texturing machine, expanded along paths of yarns.
FIG. 3 is a perspective view of a cooler.
FIG. 4 is a simplified partial sectional view taken along a line IV-IV in FIG. 3.
FIG. 5(a) is a front view of the filter, and FIG. 5(b) is a cross section taken along a line Vb-Vb in FIG. 5(a).
FIG. 6(a) is a cross section taken along a line VIa-VIa in FIG. 4, whereas FIG. 6(b) is a cross section taken along a line VIb-VIb in FIG. 4.
FIG. 7 is an enlarged view of an end portion of the duct shown in FIG. 4 and its surroundings, on one side in a base longitudinal direction.
FIG. 8(a) shows a state where a lid is in an open position, and FIG. 8(b) shows a state where the lid is in a closed position.
FIG. 9 is a top view of the end portion of the duct and its surroundings on the one side in the base longitudinal direction.
FIG. 10(a) and FIG. 10(b) relate to a first modification. FIG. 10(a) shows a state where a maintenance opening is open, whereas FIG. 10(b) shows a state where the maintenance opening is closed.
FIG. 11(a) and FIG. 11(b) relate to a second modification. FIG. 11(a) is a cross section taken along a plane orthogonal to a height direction, whereas FIG. 11(b) is a cross section taken along a plane orthogonal to an orthogonal direction.

### DESCRIPTION OF THE PREFERRED EMBODIMENTS

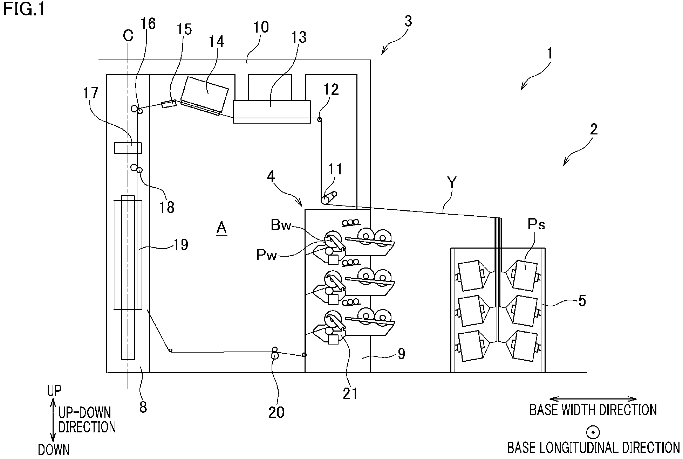

The following will describe a false-twist texturing machine 1 of a preferred embodiment of the present invention, with reference to drawings. A vertical direction to the sheet of FIG. 1 is defined as a base longitudinal direction, and a left-right direction to the sheet is defined as a base width direction. A direction orthogonal to the base longitudinal direction and the base width direction is defined as an up-down direction in which the gravity acts. In this regard, the base longitudinal direction and the base width direction are substantially in parallel to the horizontal direction.

### (Overall Structure of False-Twist Texturing Machine)

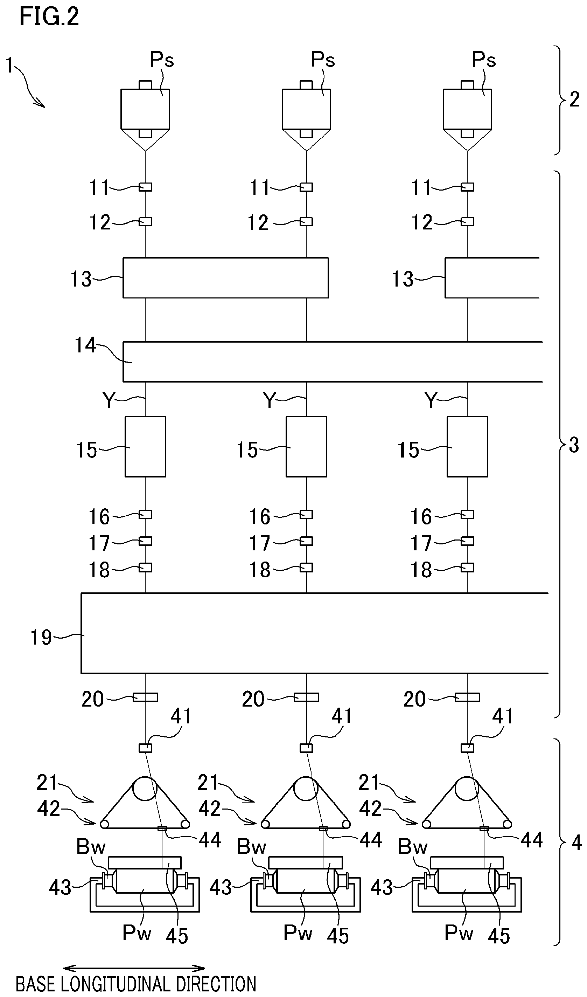

The false-twist texturing machine 1 is able to perform false twisting of yarns Y made of synthetic fibers such as nylon (polyamide fibers) and polyester. As shown in FIG. 1 and FIG. 2, the false-twist texturing machine 1 includes a yarn supplying unit 2 configured to supply a yarn Y, a processing unit 3 configured to false-twist the yarn Y supplied from the yarn supplying unit 2, and a winding unit 4 configured to wind the yarn Y processed by the processing unit 3 onto a winding bobbin Bw. As shown in FIG. 2, constituent features of the yarn supplying unit 2, the processing unit 3, and the winding unit 4 are aligned to form plural lines in the base longitudinal direction. The base longitudinal direction is a direction orthogonal to a running plane (plane of FIG. 1) of the yarns Y. The running plane of the yarns Y is formed of the yarn paths extending from the yarn supplying unit 2 to the winding unit 4 via the processing unit 3.

The yarn supplying part 2 includes a creel stand 5 retaining yarn supply packages Ps. The yarn supplying unit 2 is configured to supply the yarns Y to the processing unit 3. The processing unit 3 is configured to false-twist the yarns Y supplied from the yarn supply packages Ps. In the processing unit 3, mainly the following members are provided in this order from the upstream side in a yarn running direction: a first feed roller 11; a twist-stopping guide 12; a first heater 13; a cooler 14; a false-twisting device 15; a second feed roller 16; an interlacing device 17; a third feed roller 18; a second heater 19; and a fourth feed roller 20. The winding unit 4 includes plural winding devices 21. Each winding device 21 is configured to wind a yarn Y false-twisted by the processing unit 3 onto a winding bobbin Bw, so as to form a wound package Pw.

The false-twist texturing machine 1 includes a main base 8 and a winding base 9 which are spaced apart from each other in the base width direction. The main base 8 and the winding base 9 extend to be substantially identical in length in the base longitudinal direction. The main base 8 and the winding base 9 oppose each other in the base width direction. An upper part of the main base 8 is connected to an upper part of the winding base 9 by a supporting frame 10. Each device forming the processing unit 3 is mainly attached to the main base 8 or the supporting frame 10. Each device forming the winding unit 4 is mainly attached to the winding base 9. The main base 8, the winding base 9, and the supporting frame 10 form a working space A in which an operator performs an operation such as yarn threading to each device. The yarn paths are formed so that the yarns Y mainly run around the working space A.

The false-twist texturing machine 1 further includes units termed spans each of which includes a pair of the main base 8 and the winding base 9 provided to oppose each other. In one span, processing units (which are termed spindles) in which yarn paths are formed to pass the devices constituting the processing unit 3 are lined up in the base longitudinal direction. With this arrangement, in one span, yarns Y running while being lined up in the base longitudinal direction can be simultaneously false-twisted. As shown in FIG. 1, in the false-twist texturing machine 1, the spans are placed in a left-right symmetrical manner to the sheet, with a center line C in the base width direction of the main base 8 being set as a symmetry axis. The main base 8 is shared between the left span and the right span. The spans are aligned in the base longitudinal direction.

### (Processing Unit)

The following will describe the structure of the processing unit 3 with reference to FIG. 1 and FIG. 2. Each first feed roller 11 is configured to unwind a yarn Y from a yarn supply package Ps attached to the yarn supplying part 2, and to feed the yarn Y to a first heater 13. As shown in FIG. 2, for example, the first feed roller 11 is configured to feed one yarn Y to the first heater 13. The first feed roller 11 may be able to feed adjacent yarns Y to the downstream side in the yarn running direction. The twist-stopping guide 12 is provided to prevent twist of the yarn Y from being propagated to the upstream side of the twist-stopping guide 12 in the yarn running direction. The twist of the yarn Y is formed by the false-twisting device 15.

The first heater 13 is configured to heat the yarn Y fed from the first feed roller 11. As shown in FIG. 2, for example, the first heater 13 is able to heat two yarns Y. However, the disclosure is not limited to this. The first heater 13 may be able to heat one yarn Y, for example. Alternatively, the first heater 13 may be able to heat three or more yarns Y.

The cooler 14 is configured to cool the yarns Y heated by the first heater 13. The cooler 14 is a contactless device configured to cool neighboring yarns Y by means of cooling wind. The structure of the cooler 14 will be detailed later.

The false-twisting device 15 is provided downstream of the cooler 14 in the yarn running direction. The false-twisting device 15 is configured to twist the yarn Y. For example, the false-twisting device 15 is a so-called disc-friction false-twisting device or a known belt-type false-twisting device. However, the disclosure is not limited to them.

The second feed roller 16 is configured to feed the yarn Y processed by the false-twisting device 15 to the interlacing device 17. The conveyance speed of conveying the yarn Y by the second feed roller 16 is higher than the conveyance speed of conveying the yarn Y by each first feed roller 11. Because of this, the yarn Y is therefore drawn and false-twisted between each first feed roller 11 and each second feed roller 16.

Each interlacing device 17 is configured to interlace a yarn Y. Each interlacing device 17 has, e.g., a known interlace nozzle configured to interlace the yarn Y by means of an airflow.

Each third feed roller 18 is configured to send, to the second heater 19, a yarn Y running on the downstream side of one interlacing device 17 in the yarn running direction. As shown in FIG. 2, for example, the third feed roller 18 is configured to feed one yarn Y to the second heater 19. The third feed roller 18 may be able to feed adjacent yarns Y to the downstream side in the yarn running direction. The conveyance speed of conveying the yarn Y by the third feed roller 18 is lower than the conveyance speed of conveying the yarn Y by each second feed roller 16. The yarn Y is therefore relaxed between the second feed roller 16 and the third feed roller 18.

The second heater 19 is configured to heat the yarn Y sent from the third feed roller 18. The second heater 19 extends along the vertical direction, and one second heater 19 is provided in one span.

The fourth feed roller 20 is configured to feed the yarn Y heated by the second heater 19 to the winding device 21. As shown in FIG. 2, for example, the fourth feed roller 20 is able to feed one yarn Y to the winding device 21. Alternatively, the fourth feed roller 20 may be able to feed plural adjacent yarns Y to the downstream side in the yarn running direction. The conveyance speed of conveying the yarn Y by the fourth feed roller 20 is lower than the conveyance speed of conveying the yarn Y by the third feed roller 18. The yarn Y is therefore relaxed between the third feed roller 18 and the fourth feed roller 20.

In the processing unit 3 arranged as described above, the yarn Y drawn between the first feed roller 11 and the second feed roller 16 is twisted by the false-twisting device 15. The twist formed by the false-twisting device 15 propagates to the twist-stopping guide 12, but does not propagate to the upstream side of the twist-stopping guide 12 in the yarn running direction. The yarn Y which is twisted and drawn is heated at the first heater 13 and thermally set. After that, the yarn Y is cooled at the cooler 14. The yarn Y is untwisted on the downstream side of the false-twisting device 15 in the yarn running direction. However, the yarn Y is maintained to be wavy in shape on account of the thermal setting described above (i.e., the crimp contraction of the yarn Y is maintained).

The false-twisted yarn Y is interlaced by the interlacing device 17 while being relaxed between the second feed roller 16 and the third feed roller 18. Thereafter, the yarn Y is guided toward the downstream side in the yarn running direction. Furthermore, the yarn Y is thermally processed by the second heater 19 while being relaxed between the third feed roller 18 and the fourth feed roller 20. Finally, the yarn Y sent from the fourth feed roller 20 is wound by the winding device 21.

### (Structure of Winding Unit)

The following will describe the structure of the winding unit 4 with reference to FIG. 2. The winding unit 4 includes a winding device 21 provided for each spindle. Each winding device 21 is able to wind a yarn onto one winding bobbin Bw. Each winding device 21 mainly includes a fulcrum guide 41, a traverse device 42, and a cradle 43.

The fulcrum guide 41 is a guide functioning as a fulcrum when the yarn Y is traversed. The traverse device 42 is able to traverse the yarn Y by means of a traverse guide 44. The cradle 43 is configured to rotatably support the winding bobbin Bw. A contact roller 45 is provided in the vicinity of the cradle 43. The contact roller 45 is configured to make contact with a surface of one wound package Pw so as to apply a contact pressure to the surface of the wound package Pw.

The winding unit 4 arranged as described above makes it possible to wind the yarn Y sent from the fourth feed roller 20 onto the winding bobbin Bw by means of the winding device 21, so as to form the wound package Pw.

### (Specific Details of Cooler)

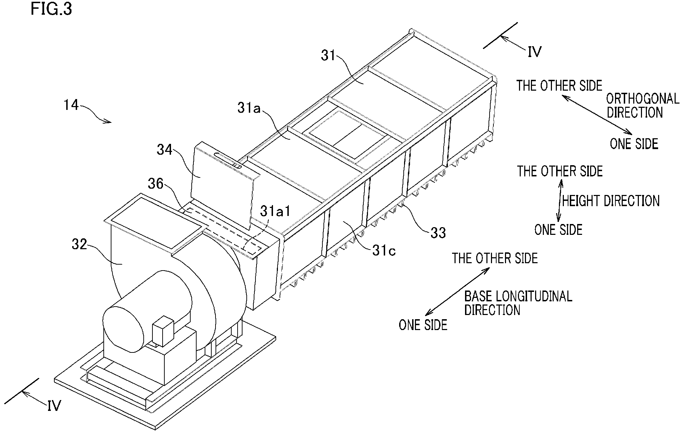

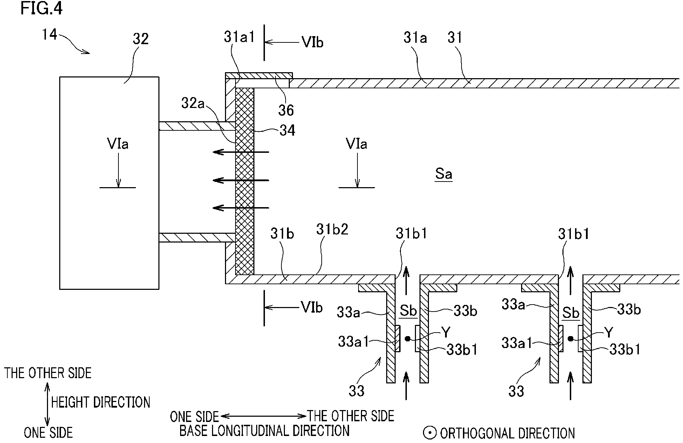

The following will detail the structure of the cooler 14 further with reference to FIG. 3 to FIG. 5. Hereinafter, the up-down direction on the sheet of FIG. 4 will be referred to as a height direction. The height direction is orthogonal to the base longitudinal direction. In the present embodiment, the height direction has at least a component in the up-down direction. In the present embodiment, one side in the height direction is basically equivalent to a lower side. Meanwhile, the other side in the height direction is basically equivalent to an upper side. However, the relationship between the height direction and the up-down direction may be changed in accordance with the orientation of the cooler 14. In addition to the above, a direction orthogonal to both the base longitudinal direction and the height direction will be referred to as an orthogonal direction, for the sake of convenience.

As shown in FIG. 3 and FIG. 4, the cooler 14 mainly includes a duct 31, a suction device 32, and multiple cooling units 33. The number of cooling units 33 can be set at will. Furthermore, as shown in FIG. 4, the cooler 14 has a filter 34 that is detachably provided in the duct 31.

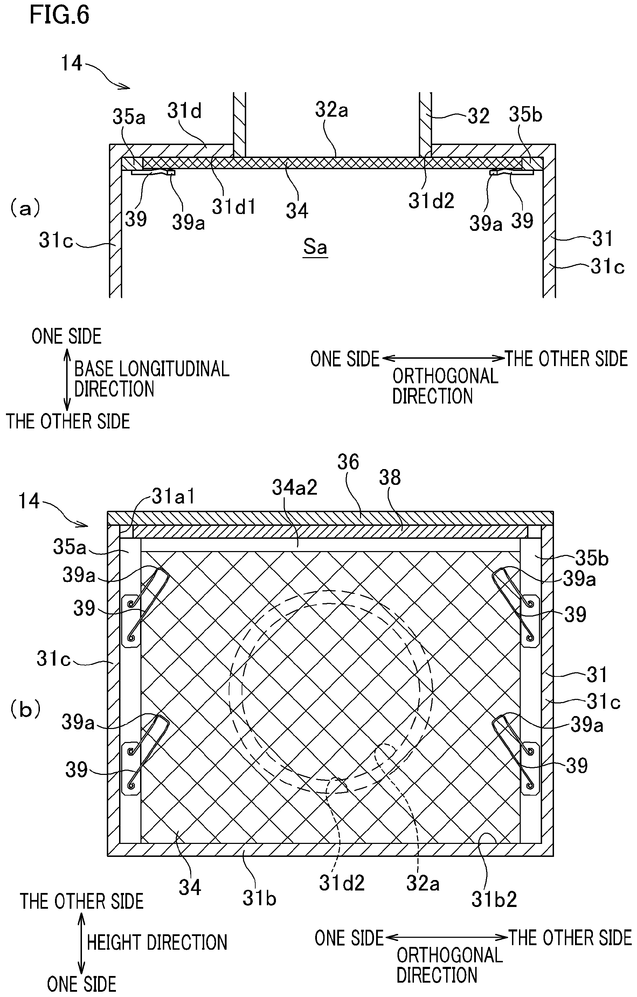

The duct 31 is formed by a tubular member. In the present embodiment, the duct 31 extends in a straight line throughout. The duct 31 extends along the base longitudinal direction. A cross section of a surface of the duct 31, which is orthogonal to the base longitudinal direction, is rectangular in shape (see FIG. 6(b)). The duct 31 includes an upper wall 31a and a lower wall 31b that are orthogonal to the height direction and two side walls 31c that are orthogonal to the orthogonal direction. The duct 31 has an in-duct space Sa defined by the upper wall 31a, the lower wall 31b, and the two side walls 31c.

As shown in FIG. 4, the lower wall 31b has multiple slits 31b1. The slits 31b1 are aligned in the base longitudinal direction. Each slit 31b1 extends in the orthogonal direction. The slits 31b1 are provided for the respective cooling units 33. The slits 31b1 connect the in-duct space Sa to a later-described yarn running space Sb formed in each cooling unit 33.

The suction device 32 is connected to an end portion on one side in the base longitudinal direction of the duct 31, as shown in FIG. 3 and FIG. 4. The suction device 32 can suck air in the in-duct space Sa. The suction device 32 is, e.g., a known blower.

The cooling units 33 are aligned along the base longitudinal direction (the direction in which the duct 31 extends), as shown in FIGs. 3 and 4. The cooling units 33 are individually provided for the respective yarns Y. The cooling units 33 are attached to the bottom surface of the lower wall 31b of the duct 31.

Each cooling unit 33 has a pair of plates 33a and 33b, as shown in FIG. 4. The plates 33a and 33b are both arranged in a posture in which the thickness direction is in parallel to the base longitudinal direction, and extend in the orthogonal direction. The plates 33a and 33b are arranged with a gap between them in the base longitudinal direction. A space extending in the orthogonal direction and formed between the plates 33a and 33b is the yarn running space Sb in which the yarn Y runs. The yarn running space Sb is connected to the in-duct space Sa through a slit 31b1 formed in the lower wall 31b of the duct 31. The yarn running space Sb is connected to the in-duct space Sa in the height direction (i.e., the direction perpendicular to the extending direction of the duct 31).

On a surface of the plate 33b which opposes the plate 33a, contact bodies 33a1 are provided to be separated from one another in the orthogonal direction. On a surface of the plate 33b which opposes the plate 33b, contact bodies 33b1 are provided to be separated from one another in the orthogonal direction. The contact body 33a1 and the contact body 33b1 are provided at different positions in the orthogonal direction. This prevents the yarn Y running in the yarn running space Sb from unintentionally making contact with parts of surfaces of the plates 33a and 33b, the surfaces defining the yarn running space Sb and the parts being where the contact body 33a1 and the contact body 33b1 are not provided.

Now, airflows generated by the cooler 14 will be described. In FIG. 4, airflows generated when the cooler 14 is in operation are indicated by arrows. In the cooler 14, negative pressure is generated in the in-duct space Sa by sucking the air in the in-duct space Sa by the suction device 32. Note that the negative pressure refers to a pressure that is lower than the atmospheric pressure (more specifically, in the present embodiment, the air pressure in a space outside the cooler 14). As a result, the air in the yarn running space Sb flows out from an upper end portion of the yarn running space Sb to the in-duct space Sa, and outside air flows into the yarn running space Sb from a lower end portion of the yarn running space Sb. To put it differently, an airflow from the yarn running space Sb toward the in-duct space Sa is generated. The yarn Y running in the yarn running space Sb is cooled by this airflow.

The filter 34 is detachably provided between the yarn running spaces Sb and the suction port 32a of the suction device 32 in the in-duct space Sa, as shown in FIG. 4. More specifically, the filter 34 is provided between (i) the yarn running space Sb which is closest to the suction port 32a in the base longitudinal direction among the yarn running spaces Sb (i.e., the leftmost one in FIG. 4) and (ii) the suction port 32a. In the present embodiment, the filter 34 is attached to cover the suction port 32a. The filter 34 may be provided at a position separated from the suction port 32a. The filter 34 is configured to allow air sucked by the suction port 32a to pass through. As shown in FIG. 3, the filter 34 having been detached can be taken out from the duct 31 through a maintenance opening 31a1 (a duct opening of the present invention) formed in the upper wall 31a of the duct 31.

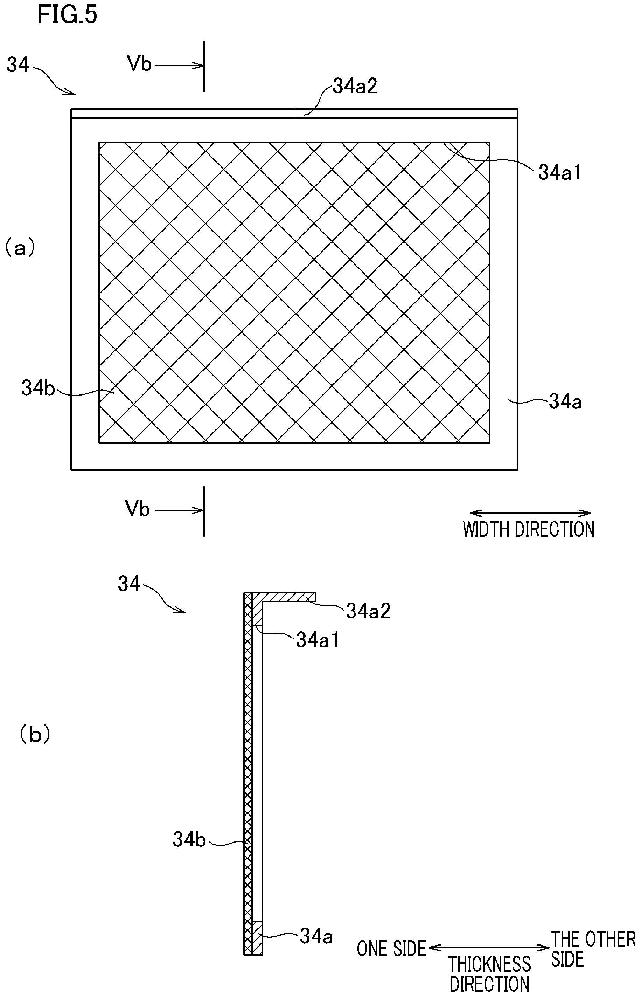

The filter 34 includes a frame 34a and a net 34b as shown in FIGs. 5(a) and 5(b). The frame 34a and the net 34b are both made of metal. The frame 34a is formed by performing sheet metal working for a plate member. Hereinafter, the thickness direction of the frame 34a will be simply referred to as "thickness direction".

The frame 34a forms a frame opening 34a1. The frame opening 34a1 is a through hole penetrating the frame 34a in the thickness direction. As shown in FIG. 5(a), the frame opening 34a1 is formed at the center of the frame 34a in front view. As shown in FIG. 5(b), the net 34b is welded to one side (left side in the figure) of the frame 34a in the thickness direction (the axial direction of the frame opening 34a1).

As shown in FIG. 5(a), the contour of the frame 34a in front view is rectangular in shape. That is, the frame 34a has four sides. A gripping portion 34a2 is formed on one of the four sides of the frame 34a. As shown in FIG. 5(b), the gripping portion 34a2 protrudes toward the other side in the thickness direction (right side in the figure). The gripping portion 34a2 is a portion that the operator holds when performing an attachment/detachment operation of the filter 34. The direction in which the side where the gripping portion 34a2 is formed extends (the left-right direction on the sheet of FIG. 5(a)) is referred to as a width direction.

### (Filter Attachment Structure)

The following will describe the attachment structure of the filter 34, further with reference to FIG. 6 to FIG. 9. In FIG. 6 to FIG. 8, the frame 34a and the net 34b of the filter 34 are not illustrated. The duct 31 has an end wall 31d provided at an end portion on one side in the base longitudinal direction, as shown in figures such as FIG. 6(a). The inner surface 31d1 on the in-duct space Sa side of the end wall 31d can make contact with a surface on the suction port 32a side of the filter 34. That is, the inner surface 31d1 is equivalent to a contact surface of the present invention.

The end wall 31d is orthogonal to the base longitudinal direction. As shown in FIG. 6(b), a circular opening 31d2 is formed at the center of the end wall 31d. The suction port 32a of the suction device 32 is provided in the opening 31d2 of the end wall 31d. The axial direction of the suction port 32a intersects with the inner surface 31d1. In the present embodiment, the axial direction of the suction port 32a is in the same direction as the base longitudinal direction and is orthogonal to the inner surface 31d1.

As shown in FIGs. 6(a) and 6(b), a pair of guide members 35a and 35b are provided at an end portion on one side of the in-duct space Sa in the base longitudinal direction. The guide members 35a and 35b extend in the height direction (the direction intersecting with the axial direction of the suction port 32a), as shown in FIG. 6(b). As shown in FIG. 6(a), the guide member 35a is positioned at an intersection between a side wall 31c on one side in the orthogonal direction and the end wall 31d. The guide member 35b is positioned at an intersection between a side wall 31c on the other side in the orthogonal direction and the end wall 31d.

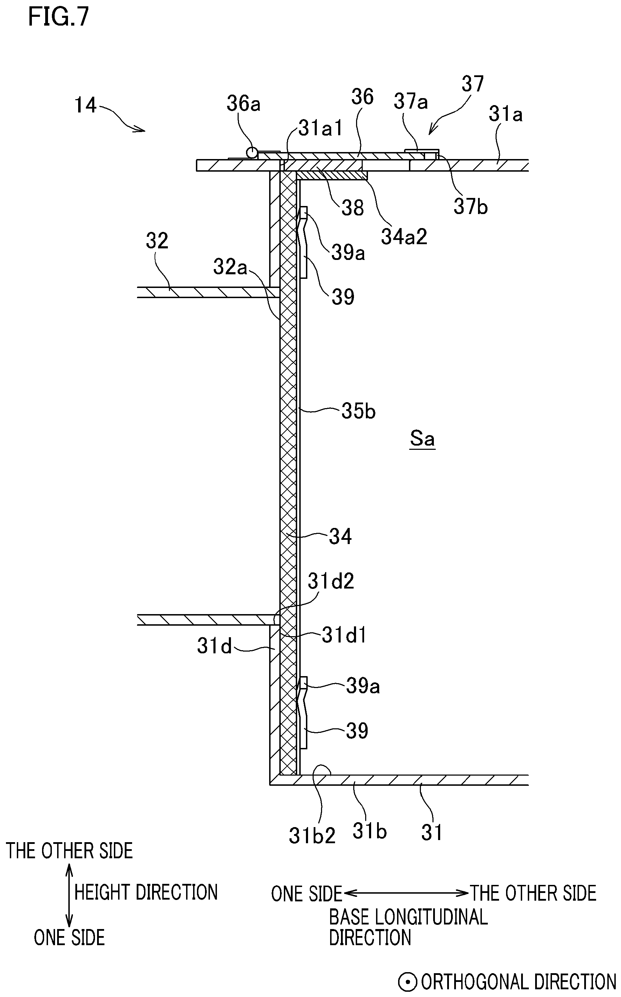

The filter 34 is fitted between the paired guide members 35a and 35b, in a posture in which the width direction (see FIG. 5(a)) is in parallel to the orthogonal direction. In addition, the filter 34 is fitted between the paired guide members 35a and 35b in an orientation in which the gripping portion 34a2 is on the other side in the height direction. The direction in which the filter 34 is inserted between the paired guide members 35a and 35b is a direction from the other side toward one side in the height direction. As shown in FIG. 7, a part of the inner surface of the lower wall 31b of the duct 31, which opposes the maintenance opening 31a1, will be referred to as a supporting surface 31b2. When the filter 34 is fitted between the paired guide members 35a and 35b, as shown in FIG. 7, the supporting surface 31b2 of the lower wall 31b of the duct 31 supports the filter 34 from below.

Furthermore, as shown in FIG. 7, the filter 34 is fitted between the paired guide members 35a and 35b in an orientation in which the side toward which the gripping portion 34a2 of the frame body 34a protrudes (i.e., the other side in the thickness direction in FIG. 5(b)) is opposite to the suction port 32a side. That is, the side on which the net 34b is welded to the frame 34a (one side in the thickness direction in FIG. 5(b)) coincides with the suction port 32a side.

The filter 34 is biased toward the inner surface 31d1 by biasing members 39. The filter 34 is pressed onto the inner surface 31d1 by the biasing forces of the biasing members 39. In the present embodiment, four biasing members 39 are provided in total such that two biasing members 39 are provided for each of the guide members 35a and 35b, as shown in FIG. 6(b). The number of biasing members 39 is not limited to this. In the present embodiment, each biasing member 39 is a wire clip. As shown in FIG. 7, each biasing member 39 (wire clip) is preferably warped so that an end portion 39a on the other side in the height direction is away from the inner surface 31d1. As a result, when fitting the filter 34 from the other side to one side in the height direction, the filter 34 can be smoothly fitted without getting caught on the biasing members 39 (wire clips). The end portion 39a of each biasing member 39 may not be warped in the direction away from the inner surface 31d1.

As shown in FIGs. 6(b) and 7, the maintenance opening 31a1 is formed at a portion that opposes the paired guide members 35a and 35b in the height direction. As shown in FIG. 4, the maintenance opening 31a1 is formed between (i) the yarn running space Sb which is closest to the suction port 32a in the base longitudinal direction among the yarn running spaces Sb (i.e., the leftmost one in FIG. 4) and (ii) the suction port 32a. The maintenance opening 31a1 is sized to allow the filter 34 to pass through. In the present embodiment, there is one maintenance opening 31a1 formed in the duct 31. Alternatively, multiple maintenance openings 31a1 may be formed in the duct 31.

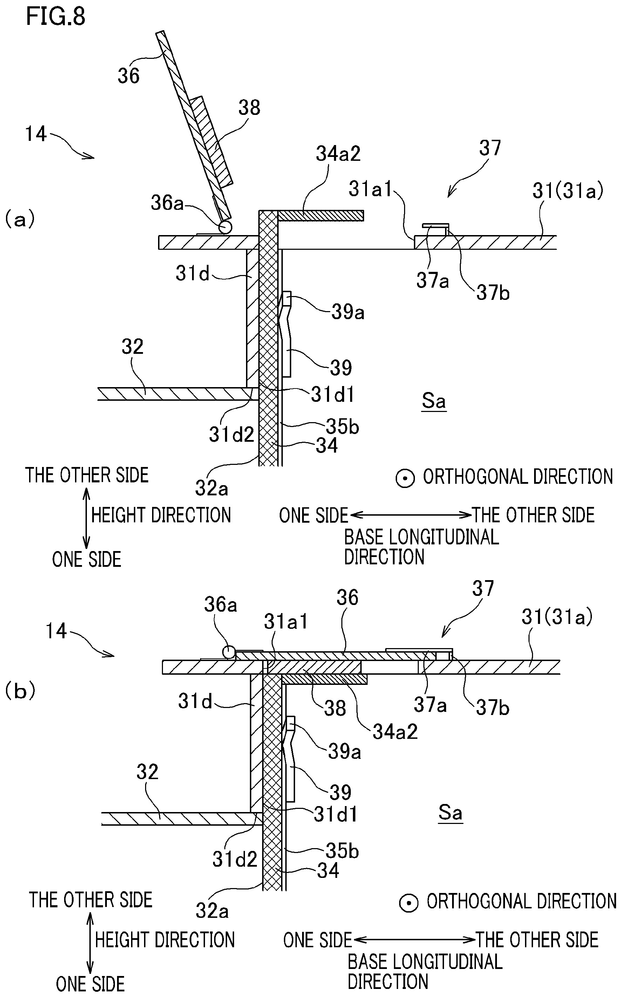

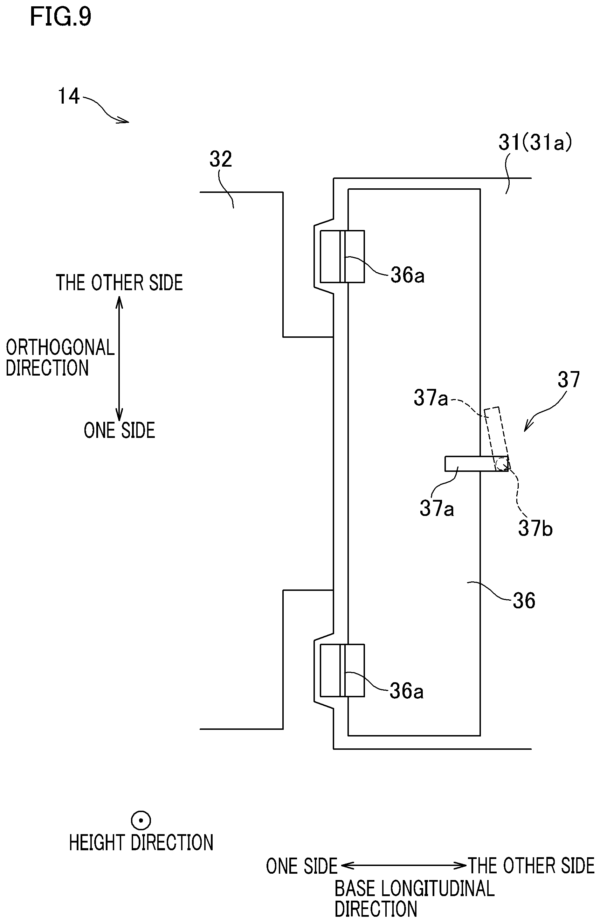

As shown in FIG. 7 to FIG. 9, a lid 36 that can close the maintenance opening 31a1 is provided on the upper wall 31a of the duct 31. The lid 36 is attached to the upper wall 31a by hinges 36a. In the present embodiment, the hinges 36a are attached to an end portion on one side in the base longitudinal direction of the lid 36. The hinges 36a may be attached to an end portion on the other side in the base longitudinal direction of the lid 36, for example. As shown in FIG. 9, the hinges 36a are attached to the respective end portions in the orthogonal direction of the lid 36, for example. The number of hinges 36a is not limited to this. With this arrangement, the lid 36 is movable between an open position (see FIG. 8(a)) where the maintenance opening 31a1 is open and a closed position (see FIG. 8(b)) where the maintenance opening 31a1 is closed.

As shown in FIG. 9, the upper wall 31a of the duct 31 is provided with a fixing mechanism 37 that can take a fixing state in which the lid 36 is fixed to close the maintenance opening 31a1 and a non-fixing state in which the lid 36 is not fixed. In the present embodiment, the fixing mechanism 37 is composed of a fixing member 37a that is swingable about a shaft 37b extending along the height direction. The fixing mechanism 37 is in the fixing state when the fixing member 37a overlaps with the lid 36 when viewed in the height direction (see a solid line in FIG. 9). The fixing mechanism 37 is in the non-fixing state when the fixing member 37a does not overlap with the lid 36 when viewed in the height direction (see a dotted line in FIG. 9). The structure of the fixing mechanism 37 is not limited to this, and for example, a fastening mechanism such as so-called snap locks may be employed.

As shown in FIG. 7, to a surface of the lid 36, which faces the in-duct space Sa side when in the closed position, an elastic member 38 is attached. The elastic member 38 is, for example, a rubber-made member or a spring. The elastic member 38 is sandwiched between the lid 36 and the filter 34 when the lid 36 closes the maintenance opening 31a1, as shown in FIG. 8(b). With this arrangement, the filter 34 is biased toward the supporting surface 31b2 by the restoring force of the elastic member 38, when the lid 36 closes the maintenance opening 31a1. The filter 34 is therefore pressed onto the supporting surface 31b2 of the lower wall 31b.

### (Characteristics of Embodiment)

As described above, the cooler 14 of the present embodiment is a cooler 14 provided in a false-twist texturing machine 1 configured to false-twist running yarns Y and includes: a duct 31 formed of a tubular member; cooling units 33 aligned in an extending direction of the duct 31 (base longitudinal direction); a suction device 32 connected to one end portion of the duct 31 and capable of sucking air in an in-duct space Sa; and a filter 34 arranged to allow the air sucked by a suction port 32a of the suction device 32 to pass through, the in-duct space Sa is connected to yarn running spaces Sb formed in the respective cooling units 33 and in which the yarns Y run, in a direction (height direction) perpendicular to the extending direction of the duct 31, and in the in-duct space Sa, the filter 34 is detachably provided between (i) a yarn running space Sb closest to the suction port 32a in the extending direction of the duct 31 among the yarn running spaces Sb and (ii) the suction port 32a. The duct 31 has a maintenance opening 31a1 which is formed between the yarn running space Sb at the end and the suction port 32a and is sized to allow the filter 34 to pass through. Furthermore, a lid 36 that can close the maintenance opening 31a1 is provided.

With the above-described configuration, it is possible to clean the filter 34 while the filter 34 is detached and taken out from the duct 31 through the maintenance opening 31a1. As a result, the workability of the cleaning of the filter 34 is improved, and the time required for the cleaning can be shortened. Furthermore, after detaching the filter 34, another filter 34 can be attached and the cooler 14 can be operated. Therefore, the operational efficiency of the cooler 14 is improved.

In the cooler 14 of the present embodiment, the filter 34 is attached to cover the suction port 32a. With this configuration, the intrusion of foreign matters into the suction device 32 can be more reliably suppressed.

In addition to the above, in the cooler 14 of the present embodiment, the lid 36 is attached to the duct 31 to be movable between an open position where the maintenance opening 31a1 is open and a closed position where the maintenance opening 31a1 is closed. According to this configuration, because the lid 36 is not detachable from the duct 31, it is possible to prevent, for example, the loss of the lid 36.

In addition to the above, the cooler 14 of the present embodiment is provided with an elastic member 38 which is sandwiched between the lid 36 and the filter 34 when the lid 36 closes the maintenance opening 31a1. The duct 31 has a supporting surface 31b2 that is provided at a part of the inner surface opposing the maintenance opening 31a1 and is capable of supporting the filter 34. The filter 34 is biased toward the supporting surface 31b2 by the restoring force of the elastic member 38, when the lid 36 closes the maintenance opening 31a1. With this arrangement, when the lid 36 closes the maintenance opening 31a1, the filter 34 is biased toward the supporting surface 31b2 by the restoring force of the elastic member 38 sandwiched between the lid 36 and the filter 34, and is pressed onto the supporting surface 31b2. This makes it possible to position the filter 34 in the up-down direction (opposing direction in which the maintenance opening 31a1 and the supporting surface 31b2 oppose each other).

In addition to the above, the cooler 14 of the present embodiment is provided with a fixing mechanism 37 that can take a fixing state in which the lid 36 is fixed to close the maintenance opening 31a1 and a non-fixing state in which the lid 36 is not fixed. According to this configuration, by setting the fixing mechanism 37 in the fixing state during operation, it is possible to suppress unintended opening of the lid 36.

Furthermore, the cooler 14 of the present embodiment is provided with a pair of guide members 35a and 35b that extend in a direction intersecting with the axial direction of the suction port 32a, and the filter 34 is fitted between the paired guide members 35a and 35b. This arrangement makes it possible to position the filter 34 in the width direction.

In addition to the above, the cooler 14 of the present embodiment is provided with an inner surface 31d1 capable of making contact with a surface on the suction port 32a side of the filter 34 and biasing members 39 configured to bias the filter 34 toward the inner surface 31d1. With this configuration, the filter 34 can be fixed by pressing the filter 34 onto the inner surface 31d1 by the biasing members 39.

In addition to the above, in the cooler 14 of the present embodiment, the filter 34 has a metal frame 34a that forms a frame opening 34a1 and a metal net 34b that is welded to one side of the frame 34a in the axial direction of the frame opening 34a1, and the filter 34 is mounted so that the side of the frame 34a where the net 34b is welded (one side in the thickness direction) coincides with the suction port 32a side. If foreign matters adhere to the part where the net 34b is welded to the frame 34a, it is difficult to remove the foreign matters from the net 34b. According to the configuration above, the filter 34 is mounted so that the side of the frame 34a where the net 34b is welded coincides with the suction port 32a side. On this account, it is possible to avoid foreign matters carried by an airflow toward the suction port 32a (i.e., an airflow from the other side to one side in the thickness direction) from adhering to the part where the net 34b is welded to the frame 34a. This makes it easy to clean the filter 34.

In the embodiment above, the lid 36 is attached to the duct 31 by the hinges 36a. However, the disclosure is not limited to this. That is, for example, the lid 36 may be attached to the duct 31 in a state in which the lid 36 is slidable in a plane in parallel to the upper wall 31a of the duct 31. In this case, the lid 36 is movable between the open position where the maintenance opening 31a1 is open and the closed position where the maintenance opening 31a1 is closed, by sliding.

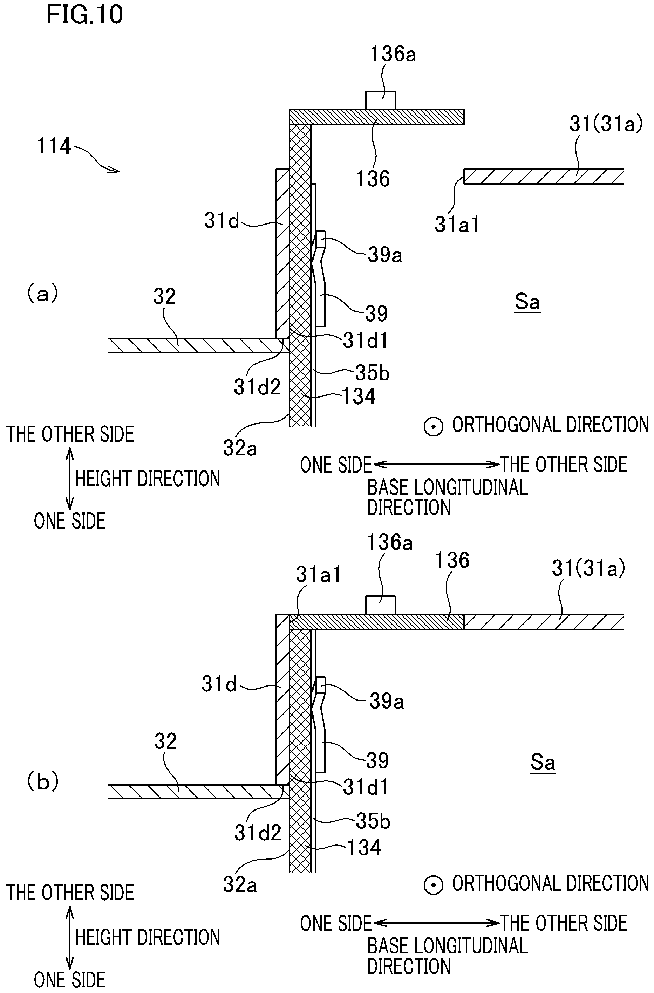

Alternatively, the lid 36 may not be attached to the duct 31. That is, for example, a lid 136 of a first modification shown in FIGs. 10(a) and 10(b) is formed integrally with a filter 134. As shown in FIG. 10(a), when the filter 134 is not attached, the maintenance opening 31a1 is open. As shown in FIG. 10(b), the maintenance opening 31a1 is closed by the lid 136 as the filter 134 is attached. In this case, the lid 136 preferably has a gripping portion 136a that the operator can grip. The gripping portion 136a is provided at a part of the lid 136, which is exposed when the maintenance opening 31a1 is closed by the lid 136, as shown in FIG. 10(b). In this modification, simply by attaching the filter 134, it is possible to close the maintenance opening 31a1. Furthermore, it is possible to avoid, for example, the loss of the lid 136.

While in the embodiment above the duct 31 extends along the horizontal direction, the disclosure is not limited to this. The duct 31 may extend in a direction that intersects with the horizontal direction.

While in the embodiment above the maintenance opening 31a1 is formed in the upper wall 31a of the duct 31, the disclosure is not limited to this. The maintenance opening 31a1 may be formed in the lower wall 31b or the side wall 31c of the duct 31.

In the above-described embodiment, the elastic member 38 which is sandwiched between the lid 36 and the filter 34 when the lid 36 closes the maintenance opening 31a1 is attached to the lid 36. However, the disclosure is not limited to this. The elastic member 38 may be attached to the filter 34. The elastic member 38 may be omitted.

While the fixing mechanism 37 for fixing the lid 36 is provided in the embodiment above, the fixing mechanism 37 may be omitted.

While the pair of guide members 35a and 35b guiding the filter 34 are provided in the embodiment above, the pair of guide members 35a and 35b may be omitted.

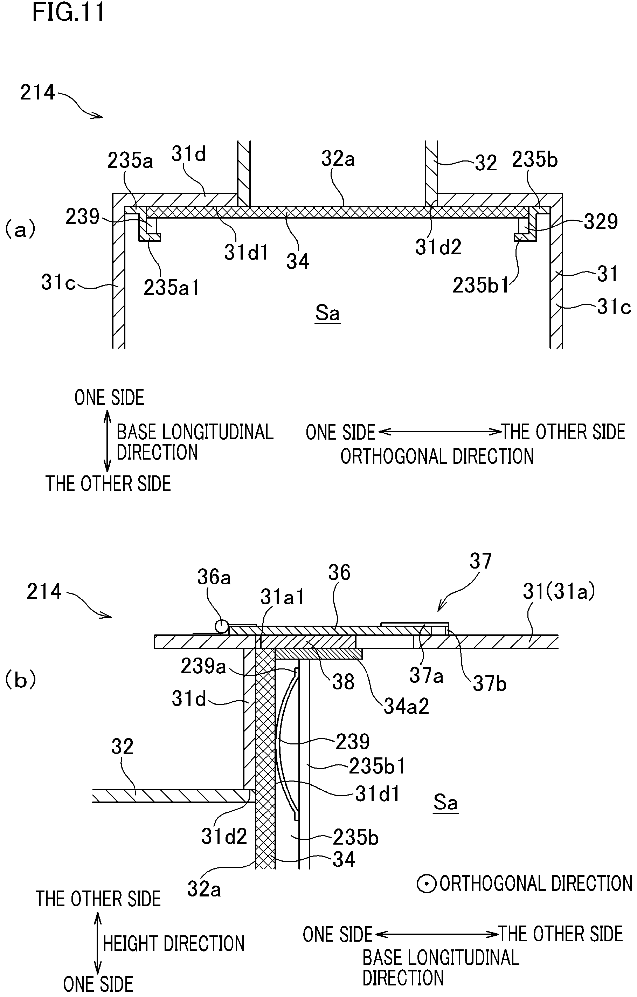

In addition to the above, while in the embodiment above the biasing members 39 configured to bias the filter 34 toward the inner surface 31d1 are wire clips, the disclosure is not limited to this arrangement. FIGs. 11(a) and 11(b) show a biasing member 239 of a second modification. As shown in FIG. 11(b), the biasing member 239 is a leaf spring. The biasing member 239 is curved to bulge toward one side in the base longitudinal direction when viewed in the orthogonal direction. That is to say, an end portion 239a on the other side in the height direction of the biasing member 239 is warped away from the inner surface 31d1. As a result, when fitting a filter 34 from the other side to one side in the height direction, the filter 34 can be smoothly fitted without getting caught on the biasing members 239 (leaf springs).

As shown in FIG. 11(a), a pair of guide members 235a and 235b have opposing portions 235a1 and 235b1 that oppose end portions in the width direction (orthogonal direction) of the filter 34 fitted between the paired guide members 235a and 235b. The biasing members 239 are attached to surfaces of the opposing portions 235a1 and 235b1, which oppose the filter 34.

The biasing members 39 and 239 may be omitted.

In the embodiment above, the filter 34 is mounted so that the side of the frame 34a where the net 34b is welded coincides with the suction port 32a side. However, the disclosure is not limited to this. That is, the filter 34 may be mounted so that the side of the frame 34a where the net 34b is welded is opposite to the suction port 32a side. The net 34b may not be welded to the frame 34a. The net 34b may be attached to the frame 34a by a fixing member such as a screw. The frame 34a and the net 34b may not be made of metal. The frame 34a and the net 34b may be made of resin, etc. The frame 34a and the net 34b may be made of different materials.

While in the embodiment above the suction device 32 is provided so that, at one end portion of the duct 31, the axial direction of the suction port 32a coincides with the extending direction of the duct 31 (base longitudinal direction), the disclosure is not limited to this. For example, the suction device 32 may be provided so that, at one end portion of the duct 31, the axial direction of the suction port 32a coincides with a direction (e.g., the height direction) orthogonal to the extending direction of the duct 31.

While in the embodiment above the entirety of the duct 31 linearly extends along the base longitudinal direction, the disclosure is not limited to this. That is, the duct 31 may be arranged at right angles or may include a bent section. In this case, multiple cooling units 33 may be attached to a curved section of the duct 31 and aligned along the extending direction of the curved duct 31.

Furthermore, while in the embodiment above the suction device 32 sucks air in the in-duct space Sa, the suction device 32 may be used to suck any gas in the in-duct space

Sa.

## Claims

1. A cooler (14) provided in a false-twist texturing machine (1) configured to false-twist running yarns (Y), the cooler (14) comprising:
a duct (31) formed of a tubular member;
cooling units (33) aligned along an extending direction of the duct (31);
a suction device (32) connected to one end portion of the duct (31) and capable of sucking gas in an in-duct space (Sa) of the duct (31); and
a filter (34) configured to allow the gas sucked through a suction port (32a) of the suction device (32) to pass through,
the in-duct space (Sa) being connected to yarn running spaces (Sb) which are formed in the respective cooling units (33) and in which the yarns (Y) run, in a direction perpendicular to the extending direction,
in the in-duct space (Sa), the filter (34) being detachably provided between (i) an end yarn running space (Sb) closest to the suction port (32a) in the extending direction among the yarn running spaces (Sb) and (ii) the suction port (32a),
the duct (31) having a duct opening (31a1) formed between the end yarn running space (Sb) and the suction port (32a) to allow the filter (34) to pass through, the duct (31) having a supporting surface (31b2) provided at a part of an inner surface, which opposes the duct opening (31a1), and the supporting surface (31b2) being capable of supporting the filter,
the cooler (14) further comprising: a lid (36) capable of closing the duct opening (31a1); and
an elastic member (38) sandwiched between the lid (36) and the filter (34) when the lid (36) closes the duct opening (31a1), and
the filter (34) being biased toward the supporting surface (31b2) by restoring force of the elastic member (38), when the lid (36) closes the duct opening (31a1).

2. A cooler (14) provided in a false-twist texturing machine (1) configured to false-twist running yarns (Y), the cooler (14) comprising:
a duct (31) formed of a tubular member;
cooling units (33) aligned along an extending direction of the duct (31);
a suction device (32) connected to one end portion of the duct (31) and capable of sucking gas in an in-duct space (Sa) of the duct (31); and
a filter (34) configured to allow the gas sucked through a suction port (32a) of the suction device (32) to pass through,
the in-duct space (Sa) being connected to yarn running spaces (Sb) which are formed in the respective cooling units (33) and in which the yarns (Y) run, in a direction perpendicular to the extending direction,
in the in-duct space (Sa), the filter (34) being detachably provided between (i) an end yarn running space (Sb) closest to the suction port (32a) in the extending direction among the yarn running spaces (Sb) and (ii) the suction port (32a),
the duct (31) having a duct opening (31a1) formed between the end yarn running space (Sb) and the suction port (32a) to allow the filter (34) to pass through,
the cooler (14) further comprising: a lid (36) capable of closing the duct opening (31a1); and
a pair of guide members (235a, 235b) extending along a direction intersecting with an axial direction of the suction port (32a), and
the filter (34) being fitted between the paired guide members (235a, 235b).

3. The cooler (14) according to claim 2, wherein the lid (36) is integrated with the filter (34).

4. The cooler (14) according to claim 1 or 2, wherein, the lid (36) is attached to the duct (31) to be movable between an open position where the duct opening (31a1) is open and a closed position where the duct opening (31a1) is closed.

5. The cooler (14) according to any one of claims 1 to 4, wherein, the filter (34) is attached to cover the suction port (32a).

6. The cooler (14) according to any one of claims 1 to 5, further comprising a fixing mechanism (37) capable of taking a fixing state where the lid (36) is fixed to close the duct opening (31a1) and a non-fixing state where the lid (36) is not fixed.

7. The cooler (14) according to any one of claims 1 to 6, further comprising:
a contact surface (31d1) capable of making contact with a surface on the suction port (32a) side of the filter (34); and
a biasing member (39) configured to bias the filter (34) toward the contact surface (31d1).

8. The cooler (14) according to any one of claims 1 to 7, wherein,
the filter (34) includes:
a metal frame (34a) which forms a frame opening (34a1); and
a metal net (34b) which is welded to one side of the frame (34a) in an axial direction of the frame opening (34a1), and
the filter (34) is attached so that the one side coincides with the suction port (32a) side.

## Patentansprüche

1. Kühler (14), der in einer Falschdralltexturiermaschine (1) vorgesehen ist, die ausgebildet ist, laufende Garne (Y) falschzudrallen, wobei der Kühler (14) Folgendes umfasst:
einen Dukt (31), der aus einem rohrförmigen Bauteil gebildet ist;
Kühleinheiten (33), die entlang einer Erstreckungsrichtung des Dukts (31) ausgerichtet sind;
eine Saugvorrichtung (32), die mit einem Endabschnitt des Dukts (31) verbunden ist und in der Lage ist, Gas in einem Duktinnenraum (Sa) des Dukts (31) anzusaugen; und
einen Filter (34), der dazu ausgebildet ist, das durch eine Saugöffnung (32a) der Saugvorrichtung (32) angesaugte Gas hindurchtreten zu lassen,
wobei der Duktinnenraum (Sa) mit Garnlaufräumen (Sb) verbunden ist, die in den jeweiligen Kühleinheiten (33) gebildet sind und in denen die Garne (Y) in einer Richtung senkrecht zu der Erstreckungsrichtung laufen,
wobei in dem Duktinnenraum (Sa) der Filter (34) abnehmbar zwischen (i) einem endseitigen Garnlaufraum (Sb), der unter den Garnlaufräumen (Sb) in der Erstreckungsrichtung der Saugöffnung (32a) am nächsten ist, und (ii) der Saugöffnung (32a) vorgesehen ist,
wobei der Dukt (31) eine Duktöffnung (31a1) aufweist, die zwischen dem endseitigen Garnlaufraum (Sb) und der Saugöffnung (32a) gebildet ist, um den Filter (34) hindurchtreten zu lassen, wobei der Dukt (31) eine Stützfläche (31b2) aufweist, die an einem Teil einer Innenfläche vorgesehen ist, welcher der Duktöffnung (31a1) gegenüberliegt, und wobei die Stützfläche (31b2) in der Lage ist, den Filter zu stützen,
wobei der Kühler (14) weiter umfasst: einen Deckel (36), der in der Lage ist, die Duktöffnung (31a1) zu schließen; und
ein Elastikelement (38), das zwischen dem Deckel (36) und dem Filter (34) eingespannt ist, wenn der Deckel (36) die Duktöffnung (31a1) schließt, und
wobei der Filter (34) durch Rückstellkraft des Elastikelements (38) zu der Stützfläche (31b2) vorgespannt wird, wenn der Deckel (36) die Duktöffnung (31a1) schließt.

2. Kühler (14), der in einer Falschdralltexturiermaschine (1) vorgesehen ist, die ausgebildet ist, laufende Garne (Y) falschzudrallen, wobei der Kühler (14) Folgendes umfasst:
einen Dukt (31), der aus einem rohrförmigen Bauteil gebildet ist;
Kühleinheiten (33), die entlang einer Erstreckungsrichtung des Dukts (31) ausgerichtet sind;
eine Saugvorrichtung (32), die mit einem Endabschnitt des Dukts (31) verbunden ist und in der Lage ist, Gas in einem Duktinnenraum (Sa) des Dukts (31) anzusaugen; und
einen Filter (34), der dazu ausgebildet ist, das durch eine Saugöffnung (32a) der Saugvorrichtung (32) angesaugte Gas hindurchtreten zu lassen,
wobei der Duktinnenraum (Sa) mit Garnlaufräumen (Sb) verbunden ist, die in den jeweiligen Kühleinheiten (33) gebildet sind und in denen die Garne (Y) in einer Richtung senkrecht zu der Erstreckungsrichtung laufen,
wobei in dem Duktinnenraum (Sa) der Filter (34) abnehmbar zwischen (i) einem endseitigen Garnlaufraum (Sb), der unter den Garnlaufräumen (Sb) in der Erstreckungsrichtung der Saugöffnung (32a) am nächsten ist, und (ii) der Saugöffnung (32a) vorgesehen ist,
wobei der Dukt (31) eine Duktöffnung (31a1) aufweist, die zwischen dem endseitigen Garnlaufraum (Sb) und der Saugöffnung (32a) gebildet ist, um den Filter (34) hindurchtreten zu lassen,
wobei der Kühler (14) weiter umfasst: einen Deckel (36), der in der Lage ist, die Duktöffnung (31a1) zu schließen; und
ein Paar von Führungselementen (235a, 235b), die sich entlang einer Richtung erstrecken, die eine Axialrichtung der Saugöffnung (32a) schneidet, und
wobei der Filter (34) zwischen die gepaarten Führungselemente (235a, 235b) eingepasst ist.

3. Kühler (14) nach Anspruch 2, wobei der Deckel (36) mit dem Filter (34) integriert ist.

4. Kühler (14) nach Anspruch 1 oder 2, wobei der Deckel (36) an dem Dukt (31) so angebracht ist, dass er zwischen einer offenen Position, in der die Duktöffnung (31a1) offen ist, und einer geschlossenen Position, in der die Duktöffnung (31a1) geschlossen ist, beweglich ist.

5. Kühler (14) nach einem der Ansprüche 1 bis 4, wobei der Filter (34) angebracht ist, um die Saugöffnung (32a) abzudecken.

6. Kühler (14) nach einem der Ansprüche 1 bis 5, weiter umfassend einen Fixiermechanismus (37), der in der Lage ist, einen Fixierzustand einzunehmen, in dem der Deckel (36) fixiert ist, um die Duktöffnung (31a1) zu schließen, und einen Nichtfixierzustand, in dem der Deckel (36) nicht fixiert ist.

7. Kühler (14) nach einem der Ansprüche 1 bis 6, weiter umfassend:
eine Kontaktfläche (31d1), die in der Lage ist, mit einer Fläche auf der Saugöffnungsseite des Filters (34) in Kontakt zu kommen; und
ein Vorspannelement (39), das dazu ausgebildet ist, den Filter (34) zu der Kontaktfläche (31d1) vorzuspannen.

8. Kühler (14) nach einem der Ansprüche 1 bis 7, wobei,
der Filter (34) einschließt:
einen Metallrahmen (34a), der eine Rahmenöffnung (34a1) bildet; und
ein Metallnetz (34b), das an einer Seite des Rahmens (34a) in einer Axialrichtung der Rahmenöffnung (34a1) verschweißt ist, und
der Filter (34) so angebracht ist, dass die eine Seite mit der Seite der Saugöffnung (32a) zusammenfällt.

## Revendications

1. Refroidisseur (14) prévu dans une machine (1) de texturation par fausse torsion configurée pour soumettre à une fausse torsion des fils (Y) en cours de défilement, le refroidisseur (14) comprenant :
un conduit (31) formé d'un élément tubulaire ;
des unités (33) de refroidissement alignées le long d'une direction d'extension du conduit (31) ;
un dispositif (32) d'aspiration relié à une portion d'extrémité du conduit (31) et capable d'aspirer un gaz dans un espace (Sa) interne du conduit (31) ; et
un filtre (34) configuré pour permettre au gaz aspiré à travers un orifice (32a) d'aspiration du dispositif (32) d'aspiration de passer à travers,
l'espace (Sa) interne du conduit étant relié à des espaces (Sb) de défilement de fils qui sont formés dans les unités (33) de refroidissement respectives et dans lesquels les fils (Y) défilent, dans une direction perpendiculaire à la direction d'extension,
dans l'espace (Sa) interne du conduit, le filtre (34) étant prévu de manière amovible entre (i) un espace (Sb) de défilement de fils d'extrémité le plus proche de l'orifice (32a) d'aspiration dans la direction d'extension parmi les espaces (Sb) de défilement de fils et (ii) l'orifice (32a) d'aspiration,
le conduit (31) présentant une ouverture (31a1) du conduit formée entre l'espace (Sb) de défilement de fils d'extrémité et l'orifice (32a) d'aspiration pour permettre au filtre (34) de passer à travers, le conduit (31) présentant une surface (31b2) de support prévue au niveau d'une partie d'une surface intérieure, qui s'oppose à l'ouverture (31a1) du conduit, et la surface (31b2) de support étant capable de supporter le filtre,
le refroidisseur (14) comprenant en outre : un couvercle (36) capable de fermer l'ouverture (31a1) du conduit ; et
un élément (38) élastique pris en sandwich entre le couvercle (36) et le filtre (34) lorsque le couvercle (36) ferme l'ouverture (31a1) du conduit, et
le filtre (34) étant sollicité vers la surface (31b2) de support par une force de rappel de l'élément (38) élastique, lorsque le couvercle (36) ferme l'ouverture (31a1) du conduit.

2. Refroidisseur (14) prévu dans une machine (1) de texturation par fausse torsion configurée pour soumettre à une fausse torsion des fils (Y) en cours de défilement, le refroidisseur (14) comprenant :
un conduit (31) formé d'un élément tubulaire ;
des unités (33) de refroidissement alignées le long d'une direction d'extension du conduit (31) ;
un dispositif (32) d'aspiration relié à une portion d'extrémité du conduit (31) et capable d'aspirer un gaz dans un espace (Sa) interne du conduit (31) ; et
un filtre (34) configuré pour permettre au gaz aspiré à travers un orifice (32a) d'aspiration du dispositif (32) d'aspiration de passer à travers,
l'espace (Sa) interne du conduit étant relié à des espaces (Sb) de défilement de fils qui sont formés dans les unités (33) de refroidissement respectives et dans lesquels les fils (Y) défilent, dans une direction perpendiculaire à la direction d'extension,
dans l'espace (Sa) interne du conduit, le filtre (34) étant prévu de manière amovible entre (i) un espace (Sb) de défilement de fils d'extrémité le plus proche de l'orifice (32a) d'aspiration dans la direction d'extension parmi les espaces (Sb) de défilement de fils et (ii) l'orifice (32a) d'aspiration,
le conduit (31) présentant une ouverture (31a1) du conduit formée entre l'espace (Sb) de défilement de fils d'extrémité et l'orifice (32a) d'aspiration pour permettre au filtre (34) de passer à travers,
le refroidisseur (14) comprenant en outre : un couvercle (36) capable de fermer l'ouverture (31a1) du conduit ; et
une paire d'éléments (235a, 235b) guides s'étendant le long d'une direction coupant une direction axiale de l'orifice (32a) d'aspiration, et
le filtre (34) étant monté entre la paire d'éléments (235a, 235b) guides.

3. Refroidisseur (14) selon la revendication 2, dans lequel le couvercle (36) est intégré au filtre (34).

4. Refroidisseur (14) selon la revendication 1 ou la revendication 2, dans lequel le couvercle (36) est fixé au conduit (31) de manière à être mobile entre une position ouverte où l'ouverture (31a1) du conduit est ouverte et une position fermée où l'ouverture (31a1) du conduit est fermée.

5. Refroidisseur (14) selon l'une quelconque des revendications 1 à 4, dans lequel le filtre (34) est fixé de manière à recouvrir l'orifice (32a) d'aspiration.

6. Refroidisseur (14) selon l'une quelconque des revendications 1 à 5, comprenant en outre un mécanisme (37) de fixation capable de prendre un état de fixation où le couvercle (36) est fixé pour fermer l'ouverture (31a1) du conduit et un état de non-fixation où le couvercle (36) n'est pas fixé.

7. Refroidisseur (14) selon l'une quelconque des revendications 1 à 6, comprenant en outre :
une surface (31d1) de contact capable de faire contact avec une surface située du côté de l'orifice (32a) d'aspiration du filtre (34) ; et
un élément (39) de sollicitation configuré pour solliciter le filtre (34) vers la surface (31d1) de contact.

8. Refroidisseur (14) selon l'une quelconque des revendications 1 à 7, dans lequel
le filtre (34) inclut :
un cadre (34a) métallique qui forme une ouverture (34a1) du cadre ; et
un filet (34b) métallique qui est soudé à un côté du cadre (34a) dans une direction axiale de l'ouverture (34a1) du cadre, et
le filtre (34) est fixé de telle sorte que le un côté coïncide avec le côté de l'orifice (32a) d'aspiration.
